# EUROPÄISCHE PATENTSCHRIFT

(11) **EP 2 301 714 B1**
(45) Veröffentlichungstag und Bekanntmachung des Hinweises auf die Patenterteilung: **30.11.2011**
(21) Anmeldenummer: 09012067.6
(22) Anmeldetag: 23.09.2009
(51) Int. Cl.: B24B 7/17, B24B 49/10, B24B 49/16, G05B 19/406

(54) **Planschleifmaschine und Verfahren zum Betrieb und/oder zur Wartung einer Planschleifmaschine**
Surface grinding machine and method for operating and/or maintaining a surface grinding machine
Rectifieuse plane et procédé de fonctionnement et/ou d'entretien d'une rectifieuse plane

(43) Veröffentlichungstag der Anmeldung: 30.03.2011
(73) Patentinhaber: Supfina Grieshaber GmbH & Co. KG, 77709 Wolfach (DE)
(72) Erfinder: Winkens, Markus, Dipl.-Ing. (FH), 77723 Gengenbach (DE); Spengler, Fritz, MA 02760 North Attleboro (US)
(74) Vertreter: Thielking, Klaus

(56) Entgegenhaltungen:
- EP-A1- 0 909 611
- EP-A1- 1 578 562
- DE-A1- 10 345 335
- US-A- 3 745 710
- US-A- 4 628 643

## Beschreibung

Die Erfindung betrifft ein Verfahren zur Wartung einer Planschleifmaschine. Eine Planschleifmaschine umfasst mindestens ein Schleifwerkzeug und mindestens einen Werkstückhalter zur Aufnahme mindestens eines Werkstücks, wobei das Schleifwerkzeug mittels eines Schleifwerkzeugantriebs und der Werkstückhalter mittels eines Werkstückhalterantriebs rotierend antreibbar sind. Bei Planschleifmaschinen der eingangs genannten Art werden Werkstücke mittels eines Schleifwerkzeugs planschleifend bearbeitet. Bei Doppelplanschleifmaschinen sind zwei zueinander beabstandete Schleifwerkzeuge vorgesehen, welche einen Schleifspalt definieren, in welchem einander gegenüberliegende Werkstückoberflächen eines Werkstücks planschleifend bearbeitbar sind.

Durch die Bearbeitung des Werkstücks nutzen sich abrasive Schichten der Schleifwerkzeuge ab, so dass sich die Geometrie der Wirkflächen der Schleifwerkzeuge in unerwünschter Weise verändert. Um dem entgegen zu wirken, ist es erforderlich, eine abrasive Schicht mittels einer Abrichteinrichtung abzurichten, um eine für eine planschleifende Bearbeitung eines Werkstücks geeignete Schleifwerkzeuggeometrie wiederherzustellen.

Zur Bestimmung des Zeitpunkts, wann ein Schleifwerkzeug abgerichtet werden soll, wird üblicher Weise auf Erfahrungswerte des Bedienpersonals einer Planschleifmaschine zurückgegriffen. Hierbei kann eine erfahrene Bedienperson auch anhand der Schliffbilder von bearbeiteten Werkstücken erkennen, ob ein Schleifwerkzeug neu abgerichtet werden muss.

Im ungünstigsten Fall kann erst anhand eines außerhalb der Toleranzgrenzen bearbeiteten Werkstücks erkannt werden, dass ein Abrichten des Schleifwerkzeugs erforderlich ist.

Auch beim Abrichten des Schleifwerkzeugs ist es üblich, auf Erfahrungswerte des Bedienpersonals der Planschleifmaschine zurückzugreifen. Das Bedienpersonal muss beispielsweise entscheiden, wie oft ein Abrichtvorgang durchgeführt werden soll. Hierfür müssen aufwändige Sicht- und Messvorgänge durchgeführt werden, um sicherzustellen, dass das Schleifwerkzeug die für eine planschleifende Bearbeitung eines Werkstücks erforderliche Geometrie aufweist.

Die vorstehend geschilderten Probleme führen dazu, dass die zur Bearbeitung eines Werkstücks zur Verfügung stehende Hauptzeit reduziert wird, und zwar um die Zeit, die beansprucht wird, um zu entscheiden, ob ein Abrichtvorgang durchgeführt werden soll und um die Zeit, die der Abrichtvorgang oder die Abrichtvorgänge selbst in Anspruch nehmen.

Aus der US 3,745,710 ist es bekannt, die Abnutzung eines Schleifrads zu überwachen, indem ein Strom eines Werkstückantriebsmotors gemessen wird und in Abhängigkeit der Messung das Abrichten des Schleifrads eingeleitet wird.

Hiervon ausgehend liegt der vorliegenden Erfindung die Aufgabe zugrunde, ein Verfahren zur Wartung einer Planschleifmaschine zu schaffen, welches eine möglichst hohe Auslastung einer Planschleifmaschine erlaubt.

Diese Aufgabe wird erfindungsgemäß durch ein Verfahren mit den Merkmalen des Anspruchs 1 gelöst.

Die Planschleifmaschine umfasst mindestens eine Istwert-Erfassungseinrichtung zur Erfassung mindestens eines Istwerts mindestens eines Parameters, welcher den zum Antrieb des Schleifwerkzeugs und/oder des Werkstückhalters erforderlichen Energiebedarf charakterisiert oder mitbestimmt, mindestens eine Speichereinrichtung zur Speicherung mindestens eines Sollwerts und/oder Sollwertbereichs, mindestens eine Auswerteeinrichtung, mittels welcher unter Verwendung des mindestens einen Sollwerts und/oder Sollwertbereichs eine Auswertung durchführbar ist, ob der mindestens eine Istwert und/oder mindestens eine aus dem mindestens einen Istwert abgeleitete Größe zulässig oder unzulässig ist, und mindestens eine in Abhängigkeit der Auswertung betreibbare Ansteuereinrichtung zur Ansteuerung einer Abrichteinrichtung zum Abrichten des Schleifwerkzeugs.

Im Rahmen der Erfindung wurde erkannt, dass ein Parameter, welcher den zum Antrieb des Schleifwerkzeugs und der des Werkzeughalters erforderlichen Energiebedarf charakterisiert oder mitbestimmt als Indikator für die Abnutzung und/oder den Abrichtzustand eines Schleifwerkzeugs verwendet werden kann. Während der Bearbeitung eines Werkstücks und während des Abrichtens eines Schleifwerkzeugs wirken Reibkräfte, und zwar entweder zwischen dem zu bearbeitenden Werkstück und dem Schleifwerkzeug oder zwischen einem Abrichtwerkzeug und dem Schleifwerkzeug. Zur Überwindung dieser Reibkräfte ist eine entsprechende Ansteuerung der Antriebseinrichtungen erforderlich. Wenn durch die zunehmende Abnutzung eines Schleifwerkzeugs eine erhöhte Reibung zwischen dem zu bearbeitenden Werkstück und dem Schleifwerkzeug auftritt, wird diese Reibungserhöhung dadurch kompensiert, dass dem Schleifwerkzeugantrieb und/oder dem Werkzeughalterantrieb pro Zeiteinheit mehr Energie zugeführt werden muss. Analog hierzu kann mit fortschreitendem Abrichtprozess eine erhöhte Reibkraft zwischen dem Abrichtwerkzeug und dem Schleifwerkzeug festgestellt werden, was mit einer entsprechenden Erhöhung des Energiebedarfs des Schleifwerkzeugantriebs und/oder eines Antriebs der Abrichteinrichtung einhergeht.

Die Istwerte des den Energiebedarf charakterisierenden oder mitbestimmenden Parameters können beispielweise kontinuierlich erfasst und ausgewertet werden. Es ist auch möglich, die Istwerte während einer vorgebbaren Zeitdauer zu erfassen und einen mittleren Istwert, einen kleinsten Istwert oder einen größten Istwert zu bestimmen.

Die Planschleifmaschine umfasst mindestens eine Speichereinrichtung, in welcher mindestens ein Sollwert und/oder mindestens ein Sollwertbereich gespeichert ist. Im einfachsten Fall kann ein erfasster Istwert mit einem Sollwert verglichen werden, um mit Hilfe der Auswerteeinrichtung festzustellen, ob der Istwert den Sollwert in unzulässiger Weise überschreitet oder unterschreitet. In Abhängigkeit dieser Auswertung ist es möglich, eine Ansteuereinrichtung zur Ansteuerung der Abrichteinrichtung zu betreiben. Dies umfasst beispielsweise die Initiierung eines Abrichtvorgangs, eine einmalige oder mehrmalige Durchführung eines Abrichtvorgangs und/oder die Beendigung eines Abrichtvorgangs.

Die Planschleifmaschine ermöglicht es also, in Abhängigkeit des Energiebedarfs des Schleifwerkzeugantriebs und/oder des Werkzeughalterantriebs zu bestimmen, ob ein Abrichtvorgang initiiert werden soll oder während eines Abrichtvorgangs dieser nochmalig durchgeführt werden muss oder der Abrichtvorgang beendet werden kann. Hierdurch kann die Hauptzeit der Planschleifmaschine verlängert werden, da sich die für die Wartungsvorgänge erforderlichen Nebenzeiten auf ein Minimum reduzieren. Insbesondere ist es für die Reduzierung der Nebenzeiten nicht erforderlich, dass das Bedienpersonal besonders gut ausgebildet und/oder besonders erfahren im Umgang mit der Planschleifmaschine ist. Damit ist die Reduzierung der Nebenzeiten weniger abhängig von subjektiven Faktoren.

Vorzugsweise betrifft der Parameter, dessen Istwert zu erfassen ist, eine Leistung und/oder einen Strom und/oder eine Spannung. Üblicherweise stehen für den Schleifwerkzeugantrieb und den Werkstückhalterantrieb Wechselspannungsquellen mit bestimmten Nennspannungen zur Verfügung. Daher ist es insbesondere vorteilhaft, den Istwert des (drehmomentbildenden) Stroms zu erfassen.

Nach einer Ausführungsform der Erfindung ist vorgesehen, dass die mindestens eine aus dem mindestens einen Istwert abgeleitete Größe eine Veränderung des Istwerts über einen vorgegebenen Zeitraum betrifft. Beispielsweise kann aus dem Verlauf von Strom-Istwerten die Ableitung gebildet werden, um unzulässig starke Veränderungen des Energiebedarfs feststellen zu können.

Nach einer bevorzugten Ausführungsform der Erfindung wird der Istwert während der Bearbeitung mindestens eines Werkstücks erfasst.

Bei der Istwerterfassung während der Bearbeitung mindestens eines Werkstücks kann insbesondere erfasst werden, ob der zu erfassende Parameter einen vorgegebenen maximalen Sollwert überschreitet.

Ein besonders guter Anhaltspunkt darüber, dass ein Schleifwerkzeug abgenutzt ist und ein Abrichtvorgang initiiert werden muss, kann erhalten werden, wenn die Bearbeitung des Werkstücks mit konstanter Drehzahl erfolgt. Hierdurch wird erreicht, dass eine erhöhte Reibkraft zwischen dem Schleifwerkzeug und dem zu bearbeiten Werkstück dadurch erkannt werden kann, dass sich die Stromaufnahme des Werkzeughalterantriebs und/oder des Schleifwerkzeugantriebs erhöht. Überschreitet der Istwert oder eine hieraus abgeleitete Größe des Parameters einen vorgegebenen Sollwert, kann ein Abrichtvorgang initiiert werden.

Eine Ausführungsform der Erfindung sieht vor, dass der Sollwert und/oder mindestens eine Grenze des Sollwertbereichs ermittelt wird oder werden, indem während der Bearbeitung mindestens eines Referenzwerkstücks mittels mindestens eines Referenzwerkzeugs ein Referenzwert des Parameters erfasst und dieser Referenzwert zur Bestimmung des Sollwerts und/oder mindestens einer Grenze des Sollwertbereichs verwendet wird, insbesondere in Abhängigkeit eines Sicherheitszuschlags oder -faktors.

Hierbei ist es möglich, dass das Referenzwerkstück durch ein Schleifwerkzeug gebildet ist, welches einmalig abgerichtet wurde, bevor es zur planschleifenden Bearbeitung eines Werkstücks eingesetzt wird. Das Referenzwerkzeug kann auch durch ein Werkzeug gebildet sein, welches ausschließlich zur Einrichtung der Planschleifmaschine verwendet wird.

Die zu bearbeitenden Werkstücke weisen üblicherweise mindestens eine für den Planschleifvorgang relevante Abmessung auf. Insbesondere handelt es sich dabei um die Werkstückdicke, welche im Ausgangszustand, also vor der Bearbeitung durch die Planschleifmaschine, innerhalb einer vorgebbaren Toleranz liegen müssen. Daher ist es vorteilhaft, wenn als Referenzwerkstück ein Werkstück verwendet wird, welches bezogen auf die zulässige Toleranz mittige oder weitestgehend mittige Abmessungen aufweist.

Um zu verhindern, dass ein Bearbeitungsvorgang eines Werkzeugs in unerwünschter Weise abgebrochen wird, weil eine leicht erhöhte Stromaufnahme festgestellt wurde, ist es vorteilhaft, einen Sollwert um einen Sicherheitszuschlag oder um einen Sicherheitsfaktor zu erhöhen. Beispielsweise kann ein Sollwert bestimmt werden, in dem ausgehend von dem Referenzwert dieser um einen Wert von zwischen ungefähr 5 % und ungefähr 15 % erhöht wird.

Die die Wartung des Schleifwerkzeugs betreffende Maßnahme kann zusätzlich zu dem Abrichten des Schleifwerkzeugs die Ausgabe von Signalen oder Hinweisen an das Bedienpersonal der Planschleifmaschine umfassen. Hierdurch kann das Bedienpersonal darauf hingewiesen werden, dass ein Abrichtvorgang des Schleifwerkzeugs erforderlich ist. Die Signale oder Hinweise können beispielsweise in optischer und/oder akustischer Form ausgegeben werden.

Erfindungsgemäß ist vorgesehen, dass der Istwert des Parameters während des Abrichtens des Schleifwerkzeugs erfasst wird. Hierbei ist es bevorzugt, wenn während des Abrichtens des Schleifwerkzeugs keine Werkstücke bearbeitet werden.

Während des Abrichtens des Schleifwerkzeugs wirkt ein Abrichtwerkzeug, beispielsweise in Form eines Diamanten, auf die Wirkfläche des Schleifwerkzeugs ein. Hierbei werden durch die Bearbeitung eines Werkstücks abgeflachte Partikel der Abrasivschicht des Schleifwerkzeugs entfernt, so dass die abgerichtete Wirkfläche des Schleifwerkzeugs von zueinander benachbarten, scharfkantigen Partikeln begrenzt ist. Darüber hinaus kann während des Abrichtvorgangs die Makrogeometrie der Wirkfläche des Schleifwerkzeugs eingeebnet werden.

Die Erfassung des Istwerts des Parameters während des Abrichtens des Schleifwerkzeugs hat den Vorteil, dass der Energiebedarf des Schleifwerkzeugantriebs dazu verwendet werden kann, die Oberflächenbeschaffenheit des Schleifwerkzeugs zu beurteilen. Auf diese Weise kann verhindert werden, dass ein Abrichtvorgang vorzeitig, also zu früh, beendet wird. Ein Indikator dafür, dass ein Abrichtvorgang noch nicht beendet werden kann, kann darin bestehen, dass ein vorgegebener Mindest-Sollwert für den Energiebedarf des Schleifwerkzeugantriebs nicht erreicht wird.

Wenn während des Abrichtens des Schleifwerkzeugs der Istwert des Parameters einen vorgegebenen Mindest-Sollwert erreicht, kann der Abrichtprozess beendet werden, so dass ein unnötig hoher Materialabtrag vermieden wird. Hierdurch wird der Abrichtvorgang insgesamt verkürzt und gleichzeitig die Standzeit des Schleifwerkzeugs erhöht.

Der Sollwert und/oder mindestens eine Grenze des Sollwertbereichs kann insbesondere ermittelt werden, indem während des Abrichtens eines Referenzschleifwerkzeugs mittels eines Referenzabrichtwerkzeugs ein Referenzwert des Parameters erfasst und dieser Referenzwert zur Bestimmung des Sollwerts und/oder mindestens einer Grenze des Sollwertbereichs verwendet wird, insbesondere in Abhängigkeit eines Sicherheitszuschlags oder -faktors.

Nach einer weiteren Ausführungsform ist vorgesehen, dass zusätzlich ein Istwert eines Zusatzparameters erfasst wird, welcher den zum Antrieb eines Abrichtwerkzeugs erforderlichen Energiebedarf charakterisiert oder mitbestimmt. Ist für den Antrieb des Abrichtwerkzeugs ein im Vergleich zu einem Mindest-Sollwert kleinerer Energiebedarf erforderlich, musst der Abrichtvorgang fortgeführt werden.

Weitere Merkmale und Vorteile der Erfindung sind Gegenstand der nachfolgenden Beschreibung und der zeichnerischen Darstellung eines bevorzugten Ausführungsbeispiels.

In der Zeichnung zeigt:

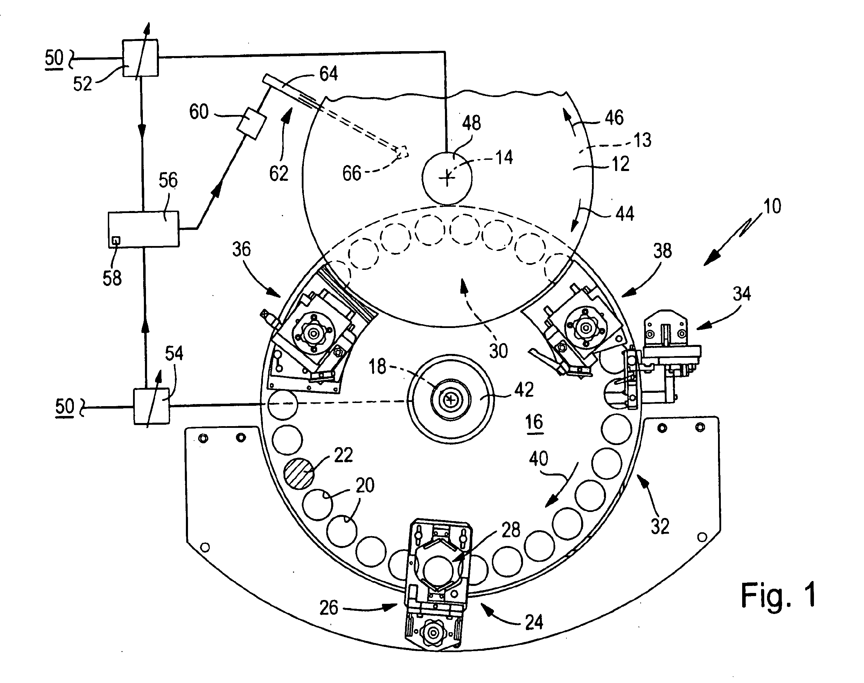

- Figur 1: eine Draufsicht einer Ausführungsform einer Planschleifmaschine.

Eine Ausführungsform einer in Figur 1 insgesamt mit dem Bezugszeichen 10 bezeichneten Planschleifmaschine ist als Doppelplanschleifmaschine ausgebildet und umfasst zwei scheibenförmige Schleifwerkzeuge, von denen in Figur 1 ein oberes Schleifwerkzeug 12 dargestellt und ein unteres Schleifwerkzeug mit dem Bezugszeichen 13 angedeutet ist. Das obere Schleifwerkzeug 12 und das untere Schleifwerkzeug 13 sind jeweils um eine Schleifwerkzeugachse 14 drehbar antreibbar.

Die Planschleifmaschine 10 umfasst ferner einen scheibenförmigen Werkstückhalter 16, welcher um eine Werkstückhalterachse 18 drehbar antreibbar ist. Die Werkstückhalterachse 18 und die Schleifscheibenachse 14 sind zueinander parallel oder um wenige Grad, beispielsweise bis maximal 5°, relativ zueinander geneigt.

Der Werkstückhalter 16 umfasst eine Mehrzahl von Werkstückaufnahmen 20, welche vorzugsweise in radialer Richtung relativ zu der Werkstückhalterachse 18 identisch beabstandet sind und ferner vorzugsweise in Umfangsrichtung gesehen relativ zueinander identisch beabstandet sind.

Vorzugsweise weist der Werkstückhalter 16 mindestens eine Werkstückaufnahme 20, beispielsweise zehn oder auch mehr Werkstückaufnahmen 20, auf. Eine Werkstückaufnahme 20 kann beispielsweise durch eine lochförmige Materialaussparung gebildet sind, welche zur Aufnahme eines Werkstücks dient. In Figur 1 ist ein Werkstück 22 aus Gründen der Übersichtlichkeit schraffiert dargestellt.

Die Planschleifmaschine 10 weist einen Bestückungsbereich 24 auf, in welchem unbearbeitete Werkstücke 22 in eine Werkstückaufnahme 20 eingelegt werden können. Das Einlegen kann von Hand oder automatisiert (z.B. mittels eines Be/Entladeroboters) erfolgen oder mittels einer Bestückungseinrichtung 26, welche insbesondere ein Magazin 28 zur Bevorratung von unbearbeiteten Werkstücken 22 aufweist.

Die Planschleifmaschine 10 umfasst ferner einen Bearbeitungsbereich 30, in welchem an dem Werkstückhalter 16 gehaltene Werkstücke 22 in planschleifendem Eingriff mit dem oberen Schleifwerkzeug 12 und mit dem unteren Schleifwerkzeug 13 stehen.

Ferner umfasst die Planschleifmaschine 10 einen Entnahmebereich 32, in welchem Werkstücke 22 aus den Werkstückaufnahmen 20 entnommen werden können.

In dem Bearbeitungsbereich 30 sind das obere Schleifwerkzeug 12 und das untere Schleifwerkzeug 13 zueinander beabstandet, so dass ein Schleifspalt entsteht, in welchem Werkstücke 22 aufgenommen und bezogen auf die Schwerkraftrichtung nach unten und nach oben abgestützt sind. Außerhalb des Bearbeitungsbereichs 30 sind die Werkstücke 22 in dem Bestückungsbereich 24 und in dem Entnahmebereich 32 nach unten hin mit Hilfe in der Zeichnung nicht dargestellter Werkstückauflagen abgestützt.

Vorzugsweise umfasst die Planschleifmaschine 10 eine Messeinrichtung 34, welche in einem Eingangsbereich des Entnahmebereichs 32 angeordnet ist. Mit Hilfe der Messeinrichtung 34 wird eine parallel zur Erstreckungsrichtung des Schleifspalts anliegende Dicke eines Werkstücks 22 gemessen.

Die Planschleifmaschine 10 weist an den Bearbeitungsbereich 30 angrenzend eine erste Führungseinrichtung 36 im Bereich eines Einlaufs des Bearbeitungsbereichs 30 und eine zweite Führungseinrichtung 38 im Bereich eines Auslaufs des Bearbeitungsbereichs 30 auf.

Zum Antrieb des Werkstückhalters 16 um die Werkstückhalterachse 18 in einer Drehrichtung 40 ist ein Werkstückhalterantrieb 42 vorgesehen, welcher insbesondere in Form eines Elektromotors ausgebildet ist.

Zum Antrieb des Schleifwerkzeugs 12 und/oder des Schleifwerkzeugs 13 um die Werkstückhalterachse 18 in einer Drehrichtung 44 oder 46 ist ein Schleifwerkzeugantrieb 48 vorgesehen, welcher insbesondere in Form eines Elektromotors ausgebildet ist.

Der Werkstückhalterantrieb 42 und der Schleifwerkzeugantrieb 48 werden von einer Energiequelle 50, beispielsweise in Form einer Dreiphasenwechselstromquelle, mit Energie versorgt. Der für den Betrieb des Werkzeugantriebs 48 erforderliche Energiebedarf wird mittels jeweils einer Istwert-Erfassungseinrichtung 52, 54 erfasst. Diese Einrichtungen erfassen beispielsweise den Strom , welcher erforderlich ist, um das Schleifwerkzeug 12 und/oder das Schleifwerkzeug 13 mit einer vorgebbaren Schleifwerkzeugdrehzahl zu betreiben und/oder um den Werkstückhalter 16 mit einer vorgebbaren Werkstückhalterdrehzahl anzutreiben.

Die Istwert-Erfassungseinrichtung 52 und 54 kommunizieren mit einer Auswerteeinheit 56, welche eine Speichereinrichtung 58 zur Speicherung mindestens eines Sollwerts und/oder mindestens eines Sollwertbereichs umfasst.

Die Auswerteeinrichtung 58 ist insbesondere in Form eines Vergleichers ausgebildet und ermöglicht eine Auswertung, ob mittels der Istwert-Erfassungseinrichtungen 52, 54 erfasste Istwerte oder hieraus abgeleitete Größen zulässig oder unzulässig sind, indem ein Istwert oder eine aus dem Istwert abgeleitete Größe mit dem in der Speichereinrichtung 58 hinterlegten Sollwert oder Sollwertbereich verglichen wird. In Abhängigkeit dieser Auswertung steuert die Auswerteeinrichtung 58 dann eine Ansteuereinrichtung 60 einer Abrichteinrichtung 62 an.

Die Abrichteinrichtung 62 umfasst einen Antrieb 64 zum Antrieb eines Abrichtwerkzeugs 66. Das Abrichtwerkzeug 66 ist beispielsweise in Form eines Diamanten ausgebildet.

Die Planschleifmaschine 10 funktioniert folgendermaßen:

Unbearbeitete Werkstücke 22 werden insbesondere mit Hilfe der Bestückungseinrichtung 26 in die Werkstückaufnahmen 20 eingelegt. Durch Drehung des Werkstückhalters 16 mittels des Werkstückhalterantriebs 42 wird ein an dem Werkstückhalter 16 gehaltenes Werkstück 22 mittels der ersten Führungseinrichtung 36 in den Bearbeitungsbereich 30 eingebracht, in welchem das zu bearbeitende Werkstück 22 zwischen dem oberen Schleifwerkzeug 12 und dem unteren Schleifwerkzeug 13 angeordnet ist. Hierbei erfolgt eine planschleifende Bearbeitung von einander gegenüberliegenden Oberflächen des Werkstücks 22. Nach Bearbeitung eines Werkstücks 22 wird dieses über die zweite Führungseinrichtung 38 in den Entnahmebereich 32 gebracht, wo es von dem Werkstückhalter 16 entfernt werden kann. Gegebenenfalls erfolgt eine Messung der Dicke eines bearbeiteten Werkstücks 22 mittels der Messeinrichtung 34.

Aufgrund der Reibung zwischen einem Werkstück 22 und den Schleifwerkzeugen 12 und 13 ist zum Antrieb des Werkstückhalters 16 und zum Antrieb der Schleifwerkzeuge 12 und 13 ein Drehmoment erforderlich. Dieses erhöht sich mit zunehmender Abnutzung der Schleifwerkzeuge 12 und 13. Um also eine konstante Drehzahl des Werkstückhalters 16 und/oder der Schleifwerkzeuge 12 und/oder 13 aufrechtzuerhalten, benötigen der Werkstückhalterantrieb 42 und der Schleifwerkzeugantrieb 48 mehr Energie. Der Energiebedarf kann beispielsweise durch Messung des für den Betrieb der Antriebe 42 und 48 erforderlichen Stroms erfasst werden. Diese Strom-Istwerte können mit Hilfe der Auswerteeinrichtung 56 unter Zuhilfenahme der in der Speichereinrichtung 58 abgelegten Sollwerte ausgewertet werden. Verlässt der Strombedarf einen vorgegebenen Sollbereich, beispielsweise durch Überschreitung eines Sollwerts, wird die Ansteuereinrichtung 60 derart angesteuert, dass diese einen Abrichtvorgang initiiert, wobei das Abrichtwerkzeug 66 in Eingriff mit dem Schleifwerkzeug 12 und/oder 13 gebracht wird.

Während des Abrichtens des Schleifwerkzeugs 12 und/oder 13 wirkt eine Reibkraft zwischen dem Abrichtwerkzeug 66 und dem Schleifwerkzeug 12 und/oder 13. Wenn das Schleifwerkzeug 12 und/oder 13 abgenutzt ist, weist die Wirkfläche des Schleifwerkzeugs eine unebene Makrogeometrie auf. Hierdurch wird ein bezogen auf die Schleifwerkzeugachse 14 in radialer Richtung bewegtes Abrichtwerkzeug 66 stark oder weniger stark in Eingriff mit der Wirkfläche gebracht. Hierdurch schwanken die zum Antrieb des Schleifwerkzeugs 12 oder 13 erforderlichen Antriebsmomente. Somit schwanken zu Beginn eines Abrichtvorgangs die mittels der Istwert-Erfassungseinrichtung 52 erfassten Istwerte relativ stark, wobei diese Istwerte vergleichsweise niedrig sind. Die Istwerte erhöhen sich mit Fortschritt des Abrichtvorgangs, bei welchem abgeschliffene Partikel aus der Wirkfläche des Schleifwerkzeugs 12 und/oder 13 herausgerissen werden.

Mit Fortschritt des Abrichtvorgangs schwanken die erfassten Istwerte weniger stark, da eine fortschreitend abgerichtete Wirkfläche eines Schleifwerkzeugs 12 und/oder 13 eine weitestgehend ebene Makrogeometrie aufweist. Die in der Speichereinheit 58 hinterlegten Sollwerte ermöglichen einen Vergleich mit den wie vorstehend ermittelten Istwerten, so dass in Abhängigkeit dieser Vergleiche eine Fortführung eines Abrichtvorgangs oder eine Beendigung eines Abrichtvorgangs vorgegeben und mittels der Ansteuereinrichtung 60 umgesetzt werden kann.

## Patentansprüche

1. Verfahren zur Wartung einer Planschleifmaschine (10), welche mindestens ein Schleifwerkzeug (12, 13) und mindestens einen Werkstückhalter (16) zur Aufnahme mindestens eines Werkstücks (22) umfasst, wobei das Schleifwerkzeug (12, 13) und/oder der Werkstückhalter (16) rotierend angetrieben wird oder werden, wobei mindestens ein Istwert mindestens eines Parameters erfasst wird, welcher den zum Antrieb des Schleifwerkzeugs (12, 13) und/oder des Werkstückhalters erforderlichen Energiebedarf charakterisiert oder mitbestimmt, wobei unter Verwendung mindestens eines vorgegebenen Sollwerts und/oder Sollwertbereichs ausgewertet wird, ob der mindestens eine Istwert und/oder mindestens eine aus dem mindestens einen Istwert abgeleitete Größe zulässig oder unzulässig ist, und wobei für den Fall, dass der mindestens eine Istwert und/oder die aus dem mindestens einen Istwert abgeleitete Größe unzulässig ist, eine die Wartung des Schleifwerkzeugs (12, 13) betreffende Maßnahme, welche das Abrichten des Schleifwerkzeugs (12, 13) betrifft oder umfasst, initiiert wird, **dadurch gekennzeichnet, dass** der Istwert während des Abrichtens des Schleifwerkzeugs (12, 13) erfasst wird, um zu bestimmen, ob ein Abrichtvorgang nochmalig durchgeführt werden muss oder beendet werden kann.

2. Verfahren nach Anspruch 1, **dadurch gekennzeichnet, dass** der mindestens eine Parameter eine Leistung und/oder einen Strom und/oder eine Spannung betrifft.

3. Verfahren nach Anspruch 1 oder 2, **dadurch gekennzeichnet, dass** die mindestens eine aus dem mindestens einen Istwert abgeleitete Größe die Veränderung des Istwerts über einen vorgegebenen Zeitraum betrifft.

4. Verfahren nach einem der Ansprüche 1 bis 3, **dadurch gekennzeichnet, dass** der Istwert während der Bearbeitung mindestens eines Werkstücks (22) erfasst wird.

5. Verfahren nach einem der Ansprüche 1 bis 4, **dadurch gekennzeichnet, dass** die Bearbeitung des Werkstücks (22) mit konstanter Drehzahl erfolgt.

6. Verfahren nach Anspruch 4 oder 5, **dadurch gekennzeichnet, dass** der Sollwert und/oder mindestens eine Grenze des Sollwertbereichs ermittelt wird oder werden, indem während der Bearbeitung mindestens eines Referenzwerkstücks mittels mindestens eines Referenzwerkzeugs ein Referenzwert des Parameters erfasst und dieser Referenzwert zur Bestimmung des Sollwerts und/oder mindestens einer Grenze des Sollwertbereichs verwendet wird, insbesondere in Abhängigkeit eines Sicherheitszuschlags oder -faktors.

7. Verfahren nach einem der Ansprüche 1 bis 6, **dadurch gekennzeichnet, dass** der Sollwert und/oder mindestens eine Grenze des Sollwertbereichs ermittelt wird oder werden, indem während des Abrichtens eines Referenzschleifwerkzeugs mittels eines Referenzabrichtwerkzeugs ein Referenzwert des Parameters erfasst und dieser Referenzwert zur Bestimmung des Sollwerts und/oder mindestens einer Grenze des Sollwertbereichs verwendet wird, insbesondere in Abhängigkeit eines Sicherheitszuschlags oder -faktors.

8. Verfahren nach einem der Ansprüche 1 bis 7, **dadurch gekennzeichnet, dass** zusätzlich ein Istwert eines Zusatzparameters erfasst wird, welcher den zum Antrieb eines Abrichtwerkzeugs (66) erforderlichen Energiebedarf charakterisiert oder mitbestimmt.

9. Verwendung einer Planschleifmaschine (10) zur Durchführung eines Verfahrens nach einem der Ansprüche 1 bis 8.

## Claims

1. A method for maintaining a surface grinding machine (10) including at least one grinding tool (12, 13) and at least one workpiece holder (16) for receiving at least one workpiece (22), wherein the grinding tool (12, 13) and/or the workpiece holder (16) is or are rotary driven, wherein at least one actual value of at least one parameter is acquired, which characterizes or co-determines the energy demand required for driving the grinding tool (12, 13) and/or the workpiece holder, wherein using at least one preset nominal value and/or nominal value range it is evaluated if the at least one actual value and/or at least one quantity derived from the at least one actual value is admissible or inadmissible, and wherein in case that the at least one actual value and/or the quantity derived from the at least one actual value is inadmissible, a measure concerning the maintenance of the grinding tool (12, 13), which relates to or includes dressing of the grinding tool (12, 13), is initiated, **characterized in that** the actual value is acquired during dressing of the grinding tool (12, 13) to determine if a dressing operation has to be performed once again or can be terminated.

2. The method according to claim 1, **characterized in that** the at least one parameter relates to a power and/or a current and/or a voltage.

3. The method according to claim 1 or 2, **characterized in that** the at least one quantity derived from the at least one actual value relates to the variation of the actual value over a preset period of time.

4. The method according to anyone of claims 1 to 3, **characterized in that** the actual value is acquired during processing of at least one workpiece (22).

5. The method according to any one of claims 1 to 4, **characterized in that** the processing of the workpiece (22) is effected with constant speed.

6. The method according to claim 4 or 5, **characterized in that** the nominal value and/or at least one boundary of the nominal value range is or are determined by acquiring a reference value of the parameter during processing of at least one reference workpiece by means of at least one reference tool and using this reference value for determining the nominal value and/or at least one boundary of the nominal value range, in particular depending on a safety margin or factor.

7. The method according to any one of claims 1 to 6, **characterized in that** the nominal value and/or at least one boundary of the nominal value range is or are determined by acquiring a reference value of the parameter during dressing of a reference grinding tool by means of a reference dressing tool and using this reference value for determining the nominal value and/or at least one boundary of the nominal value range, in particular depending on a safety margin or factor.

8. The method according to any one of claims 1 to 7, **characterized in that** an actual value of an additional parameter is additionally acquired, which characterizes or co-determines the energy demand required for driving a dressing tool (66).

9. Use of a surface grinding machine (10) for performing a method according to any one of claims 1 to 8.

## Revendications

1. Procédé pour l'entretien d'une rectifieuse plane (10) qui comprend au moins un outil de rectification (12, 13) et au moins un porte-pièces (16) destiné à recevoir au moins une pièce à usiner (22), l'outil de rectification (12, 13) et/ou le porte-pièces (16) étant entraîné(s) en rotation, au moins une valeur réelle d'au moins un paramètre étant enregistrée, laquelle caractérise ou participe à la détermination de la consommation d'énergie nécessaire à l'entraînement de l'outil de rectification (12, 13) et/ou du porte-pièces, moyennant l'utilisation d'au moins une valeur théorique prédéfinie et/ou d'une plage de valeurs théoriques, il est analysé si ladite au moins une valeur réelle et si au moins une grandeur dérivée de ladite au moins une valeur réelle sont admises ou non admises, et une mesure relative à l'entretien de l'outil de rectification (12, 13) et concernant ou comprenant le dressage de l'outil de rectification (12, 13) étant initiée dans le cas où ladite au moins une valeur réelle et la grandeur dérivée de ladite au moins une valeur réelle ne sont pas admises, **caractérisé en ce que** la valeur réelle est enregistrée pendant le dressage de l'outil de rectification (12, 13) afin de déterminer s'il faut remettre en oeuvre un nouveau processus de dressage ou s'il est possible de mettre fin au processus de dressage.

2. Procédé selon la revendication 1, **caractérisé en ce que** ledit au moins un paramètre concerne une puissance et/ou un courant et/ou une tension.

3. Procédé selon la revendication 1 ou 2, **caractérisé en ce que** ladite au moins une grandeur dérivée de ladite au moins une valeur réelle concerne la variation de la valeur réelle pendant un intervalle de temps prédéfini.

4. Procédé selon l'une quelconque des revendications 1 à 3, **caractérisé en ce que** la valeur réelle est enregistrée pendant l'usinage d'au moins une pièce à usiner (22).

5. Procédé selon l'une quelconque des revendications 1 à 4, **caractérisé en ce que** l'usinage de la pièce (22) s'effectue avec une vitesse de rotation constante.

6. Procédé selon la revendication 4 ou 5, **caractérisé en ce que** la valeur théorique et/ou au moins une limite de la plage de valeurs théoriques est ou sont déterminée(s) du fait qu'une valeur de référence du paramètre est enregistrée pendant l'usinage d'au moins une pièce de référence au moyen d'au moins un outil de référence, et ladite valeur de référence est utilisée pour déterminer la valeur théorique et/ou au moins une limite de la plage de valeurs théoriques, en particulier en fonction d'un supplément de sécurité ou d'un facteur de sécurité.

7. Procédé selon l'une quelconque des revendications 1 à 6, **caractérisé en ce que** la valeur théorique et/ou au moins une limite de la plage de valeurs théoriques est ou sont déterminée(s) du fait qu'une valeur de référence du paramètre est enregistrée pendant le dressage d'un outil de rectification de référence au moyen d'un outil de dressage de référence, et ladite valeur de référence est utilisée pour déterminer la valeur théorique et/ou au moins une limite de la plage de valeurs théoriques, en particulier en fonction d'un supplément de sécurité ou d'un facteur de sécurité.

8. Procédé selon l'une quelconque des revendications 1 à 7, **caractérisé en ce que**, en plus, une valeur réelle d'un paramètre supplémentaire est enregistrée, laquelle caractérise ou participe à la détermination de la consommation d'énergie nécessaire à l'entraînement d'un outil de dressage (66).

9. Utilisation d'une rectifieuse plane (10) pour la mise en oeuvre d'un procédé selon l'une quelconque des revendications 1 à 8.
